(19)

**Europäisches Patentamt**
**European Patent Office**
**Office européen des brevets**

(11) **EP 1 244 928 B1**

(12) **EUROPEAN PATENT SPECIFICATION**

(45) Date of publication and mention
of the grant of the patent:
**01.10.2008 Bulletin 2008/40**

(21) Application number: **00985693.1**

(22) Date of filing: **22.12.2000**

(51) Int Cl.:
*G02B 26/02* (2006.01)    *G02B 26/06* (2006.01)
*H04N 5/74* (2006.01)    *H01J 29/12* (2006.01)

(86) International application number:
**PCT/GB2000/004987**

(87) International publication number:
**WO 2001/048531 (05.07.2001 Gazette 2001/27)**

(54) **OPTICAL SYSTEMS**

OPTISCHE SYSTEME

SYSTEMES OPTIQUES

(84) Designated Contracting States:
**AT BE CH CY DE DK ES FI FR GB GR IE IT LI LU
MC NL PT SE TR**

(30) Priority: **23.12.1999 GB 9930555**

(43) Date of publication of application:
**02.10.2002 Bulletin 2002/40**

(73) Proprietor: **Longevyty AS
3189 Horten (NO)**

(72) Inventor: **GUSCHO, Yury
N-3185 Horten (NO)**

(74) Representative: **Butler, Michael John et al
Frank B. Dehn & Co.
St Bride's House
10 Salisbury Square
London
EC4Y 8JD (GB)**

(56) References cited:
**RU-C- 2 031 624        RU-C- 2 080 641
SU-A- 678 519**

- **ALEKHIN V A: "Characteristics of Multichannel Phase Reliefographic Light Modulators" AVTOMETRIYA, no. 1, 1990, pages 38-43, XP000997514 Allerton Press Inc, US**
- **ALEKHIN V A: "Calculation of the optical Parameters of a Cylindrical Schlieren Projector" SOVIET JOURNAL OF OPTICAL TECHNOLOGY., vol. 52, no. 7, July 1985 (1985-07), pages 403-405, XP000997107 AMERICAN INSTITUTE OF PHYSICS, NEW YORK, NY., US ISSN: 0038-5514**
- **GUSHCHO YU P ET AL: "A Large-Screen Laser Projector based on Light Modulation in a Gel-like Deformable Layer" JOURNAL OF THE MOSCOW PHYSICAL SOCIETY, vol. 7, 1997, pages 351-361, XP000997110 Allerton Press Inc, US**
- **ALEKHIN V A ET AL: "Optical Characteristics of Phase-Relief Recording with Signal Recording from the Side of the Substrate" OPTICAL SPECTROSCOPY (USSR), vol. 52, no. 1, January 1982 (1982-01), pages 61-63, XP000990563 OPTICAL SOCIETY OF AMERICA., US ISSN: 0030-400X**
- **ALEKHIN A V ET AL: "Calculation of the Value of the Luminous Efficiency when Reproducing Relief Recordings by Schlieren Optics with Circular Irises" OPTICAL SPECTROSCOPY (USSR), vol. 43, no. 5, 1977, pages 578-581, XP000990869 OPTICAL SOCIETY OF AMERICA., US ISSN: 0030-400X**

EP 1 244 928 B1

**Description**

This invention relates to a system and method of modulating light using a light modulator incorporated in a display panel for viewing by the naked eye, with a distributed light source being placed on one side of the modulator optical systems.

The invention is more particularly concerned with such a method using light modulators which rely upon the creation of a surface relief under the action of an electric field. Such modulators have been known for many years, and for example in 1939 F. Fischer disclosed an "electro-optical transformer" using an oil layer and Schlieren optics. More recently, consideration has been given to modulators which rely upon the creation of a relief on a gel of a suitable non-polar dielectric material, such as a siloxane gel. A comprehensive discussion of such systems can be found in the book "Physics of Reliefography" by Professor Yuri Guscho published in Moscow in 1999, ISBN 5-8213-0039-8. Various proposals can be found in United States patents 4,626,920, 4,857,978 and 4,900,136, as well in Russian Federation patents 2031624, 2078478 and 2080641.

A light modulator which has been found to be successful comprises two deformable dielectric layers of different refractive coefficients, at least one of which is a gel. Typically the other layer may be air. Electrodes are provided either side of the layers, and reliefs are generated at the interface between the two layers in response to applied signals.

Reference is made, for example to Avtometria, No. 1, pages 38-43, Allerton Press Inc., 1990, Alekhin V. A. : "Characteristics of Multichannel Phase Reliefographic Light Modulators".

Polyorganosiloxane gels are particularly preferred for use as the gel layer in such modulators. One suitable gel is prepared by adding tetraethoxysilane, as a cross linking agent, and tin diethyldicaprylate, as a catalyst, to a solution of a $\alpha,\omega$-dihydroxypolydimethylsiloxane of general formula :

$$HO\text{-}Si(CH_3)_2O[\text{-}SiO(CH_3)_2\text{-}]_nSi(CH_3)_2\text{-}OH$$

in a polydimethylsiloxane of general formula :

$$(CH_3)_3SiO[\text{-}SiO(CH_3)_2\text{-}]_nSi(CH_3)_3$$

Such a gel has several advantages. It is transparent, flexible, and has good optical properties. It exhibits good response times in the formation of reliefs. It is stable and can withstand high temperatures.

A method of preparing such a polyorganosiloxane gel is disclosed, for example, in Russian Federation patent application 97108886/04 published in the Bulletin of Inventions No. 12 of 1999.

According to one aspect of the invention, there is provided a light modulation system comprising a light modulator having at least one cell which has two deformable dielectric layers which meet at an interface, at least one of which is a relief forming gel, a first electrode on one side of the layers, and a signal electrode on the other side of the layers, the light modulation system further comprising means for supplying signal voltage pulses to the signal electrode; wherein

(a) the following criteria are met:

$$0.01d_1 < d_2 < d_1$$

$$d_2 > \lambda / (20\,|\,\eta_1 - \eta_2\,|\,)$$

$$|\,\eta_1 - \eta_2\,| > 0.1$$

$$t_p > 0.01\,\tau_m$$

$$0.1d_1 < L < 10\,d_1$$

in which $d_2$ is the distance between the signal electrode and the interface between the deformable layers; $d_1$ is the

distance between the first electrode and the interface between the reformable layers; $\lambda$ is the wavelength of light with which the modulator is used; $\eta_1$ is the refractive coefficient of one of the deformable layers; $\eta_2$ is the refractive coefficient of the other of the deformable layers; $t_p$ is the duration of voltage pulses applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells; and

(b) the signal electrode comprises a plurality of laterally spaced portions and a stop-diaphragm means is arranged in the cell parallel to the dielectric layers, the stop-diaphragm means consisting of periodically repeated opaque parts which coincide either with the maxima $I_{max}$ or with the minima $I_{min}$ of the outgoing light intensity, and the repetition period T of the opaque parts being equal to the surface relief period of the relief forming gel layer, such that when said light modulation system is incorporated in a display panel, with a distributed light source being placed on one side of the light modulator, the light modulator is adapted to create images which are viewable by the naked eye.

Viewed from another aspect, the invention provides a method of modulating light comprising the steps of providing a display panel for viewing by the naked eye, said display panel including a light modulator and a distributed light source placed on one side of the light modulator, and creating images on said light modulator which are viewable by the naked eye wherein:

(a) the light modulator comprises at least one cell which has two deformable dielectric layers which meet at an interface, at least one of which is a relief forming gel, a first electrode on one side of the layers and a signal electrode on the other side of the layers to which signal pulses are applied;

(b) the following criteria are met:

$$0.01d_1 < d_2 < d_1$$

$$d_2 > \lambda / (20 \, | \, \eta_1 - \eta_2 \, | \,)$$

$$| \, \eta_1 - \eta_2 \, | > 0.1$$

$$t_p > 0.01 \, \tau_m$$

$$0.1d_1 < L < 10 \, d_1$$

in which $d_2$ is the distance between the signal electrode and the interface between the deformable layers; $d_1$ is the distance between the first electrode and the interface between the deformable layers; $\lambda$ is the wavelength of light with which the modulator is used; $\eta_1$ is the refractive coefficient of one of the deformable layers; $\eta_2$ is the refractive coefficient of the other of the deformable layers; $t_p$ is the duration of voltage pulses applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells; and

(c) the signal electrode comprises a plurality of laterally spaced portions and a stop-diaphragm means is arranged in the cell parallel to the dielectric layers, the stop-diaphragm means consisting of periodically repeated opaque parts which coincide either with the maxima $I_{max}$ or with the minima $I_{min}$ of the outgoing light intensity, and the repetition period T of the opaque parts being equal to the surface relief period of the relief forming gel layer.

The use of the modulator specified makes it possible to have a modulator with a high density of cells. If the cell density is high enough, it becomes possible to use the modulator as the display panel without the need for e.g. Schlieren optics. Thus, in accordance with a preferred embodiment of the invention there is used a display panel in the form of a light modulator having an array of cells each of which comprises two deformable dielectric layers which meet at an interface, at least one of which is a relief forming gel, a first electrode on one side of the layers and signal electrode on the other side of the layers, there being means for providing signals to the signal electrodes to create reliefs in the cells on the gel surfaces, the arrangement being such that the reliefs create images on the modulator which are viewable by the naked eye under the effect of light from a scattered source.

In a preferred embodiment of the invention there is used a display panel in which at least one cell made as described above is arranged so that a distributed light source is placed on one side of the cell so that the illuminating surface is parallel to the deformable layers and the incident light is perpendicular to the deformable layers.

Preferably between adjacent portions of a signal electrode there are provided additional electrode portions arranged to establish constant ground (zero) potential between the adjacent signal electrode portions.

An arrangement as above described may be used as a display panel without the need for additional optics.

In the preferred arrangement, the distance $H$ from the stop-diaphragm to the relief gel layer surface and the maximum value of the modulation coefficient

$$K_{max} = \frac{I_{max} - I_{min}}{I_{max} + I_{min}}$$

are determined from the Fresnel-Kirchhoff integral under the conditions

$$H \leqslant \frac{5 \cdot S^2}{\lambda}, \qquad S \geq 3T$$

in which S is the width of a cell;

> T is the period of the relief on the interface between the deformable layers and the period of the signal electrode portions; and
> $\lambda$ is the wavelength of the incident light.

Assume that a periodic relief of an approximately sinusoidal shape is created on the surface of a deformable gel layer. If a light beam is perpendicular to this surface, the minor protrusions on the relief surface will focus light like microlenses. The intensity of the light flux will be maximum at a certain distance from the relief surface; each of these maxima will correspond to its "own" protrusion (a "microlens"). In order to ensure visualization of the relief, it is necessary to place the opaque elements (for example by application onto a transparent plate) in the plane of light intensity maxima. In this case, the opaque elements will retain more light than in its absence. Other modes of visualization can also be used. Thus, whilst the relief image formed on the surface of the deformable gel layer is viewed the help of e.g. a special plate provided with a set of opaque elements, it is simpler, of course, than visualization of the relief by means of dark field method optics.

The calculation of a feasible set of parameters providing the operation of the light modulator as a display panel have been done for one-dimensional harmonic relief with the use of the Fresnel integral (a particular case of the Fresnel-Kirchhoff integral) for the intensity of light $I(x, h)$ at any distance $h$ from the relief:

$$I(x,h) = \left| \frac{1}{\lambda h} \int_{-\frac{S}{2}}^{\frac{S}{2}} u_0(\xi) \cdot exp\left[ -j\frac{\pi}{\lambda h}\left(\xi^2 - x\xi\right)\right] d\xi \right|^2$$

in which $x$ and $\xi$ are the coordinates along the direction parallel to deformable layers and the stop-diaphragm, $u_0(\xi)=exp$

$[jA(\xi)]$ is the phase transfer function of the harmonic relief $A(\xi)=A_0\cos\left(\dfrac{2\pi}{T}\xi\right)$, in which $A_0$ is the relief depth.

Calculations suggest the following possible values: T=100 $\mu$m, $A_0$=0.1-0.15 $\mu$m; $\lambda$=0.5 $\mu$m; possible values for $H_1$ ... $H_n$ lie in the range 5-25 mm. Calculations show that the Fresnel diffraction region comprises several light-focusing planes but not one, as is the case with an ordinary lens.

In general, the relief period inside a cell is determined primarily by the mode of visualisation of the relief and should not exceed 100 - 200 $\mu$m. At greater periods there will be large gaps between the signal electrodes and the surface of the deformable gel layer, in order to ensure an approximately harmonic (sinusoidal or cosinusoidal) relief. This becomes a difficult task as the voltages to be applied to the signal electrodes have to be high. The depth of the relief should be as great as possible to reduce the size of the device. Then, the distance between the relief surface and the plane containing the stop diaphragm opaque parts can be small. In practice, the relief depth will not exceed several tenths of a micron due to the maximum permissible voltage that can be applied to signal electrodes without a dielectric breakdown.

The light source may be both artificial, such as a luminodiode panel, and natural ambient lights. The light source can be placed on one side of the display panel, and the viewer on the other side. Alternatively, the light source and the viewer can be on the same side of the panel. In one possible case, light passes between the opaque parts of the plate, and then through the deformable layers to be reflected from a matrix of reflective signal electrodes, or from a reflective dielectric layer over the electrodes, before passing in the opposite direction through the deformable layers to the plane containing the opaque parts. In another case, the light passes through the layers of the cell and is then reflected from the opaque parts of the stop diaphragm back through the layers. Where the opaque parts are reflective in such a system, the remaining parts of the stop diaphragm should preferably be light absorbent.

In one possible arrangement, an additional microlens is placed between the distributed light source and the deformable layers. In one possible arrangement the signal electrodes and, if provided, the ground electrodes are coated by an additional dielectric layer. In one possible arrangement a dielectric substrate for the signal electrodes and, if provided, the ground electrodes is transparent and defines a set of individual microlenses able to focus light form each relief protrusion.

In the modulators described above the gel is preferably as described earlier. The preferred cross-linkable polysiloxane is $\alpha,\omega$-dihydroxypolydimethylsiloxane of general formula :

$$HO\text{-}Si(CH_3)_2O[\text{-}SiO(CH_3)_2\text{-}]_nSi(CH_3)_2\text{-}OH$$

The preferred polysiloxane is a polydimethylsiloxane of general formula :

$$(CH_3)_3SiO[\text{-}SiO(CH_3)_2\text{-}]_nSi(CH_3)_3$$

The preferred cross linking agent is tetraethoxysilane, and the preferred catalyst is tin diethyldicaprylate.

Preferably the $\alpha,\omega$-dihydroxypolydimethylsiloxane is in the polydimethylsiloxane as a 10 - 30% solution, and for example a 15% solution. Preferably, the methods use $\alpha,\omega$-dihydroxypolydimethylsiloxane having a molar mass of $(1\text{-}2)\cdot10^4$ g/mol in polydimethylsiloxane having a molar mass of $(0.6\text{-}1)\cdot10^3$ g/mol, at the 1:0.8-1:1.5 and 1:2-1:5 $\alpha,\omega$-dihydroxy-polydimethylsiloxane / tin diethyldicaprylate and $\alpha,\omega$-dihydroxypolydimethylsiloxane / tetraethoxysilane molar ratios.

Embodiments of the invention will now be described by way of example and with reference to the accompanying drawings, in which:

Fig. 1 shows a cell of a light modulator with a deformable gel layer;

Fig. 2 shows a light modulator with a number of cells having deformable gel layers;

Fig. 3a shows time dependencies of the voltage at the signal electrode, at the outputs of the bias voltage and support voltage units. The areas demarcated with dotted lines are shown on an enlarged scale in Fig. 3b;

Figs. 4 to 9 show steps involved in manufacturing various embodiments of the light modulator; and

Figs. 10 to 16 show various embodiments of a light modulation system and display panel in accordance with the invention.

Throughout the description and drawings, the same numbers have been used for similar items. Where an item or a procedure is not described in full for a particular embodiment, reference can be made to an earlier description.

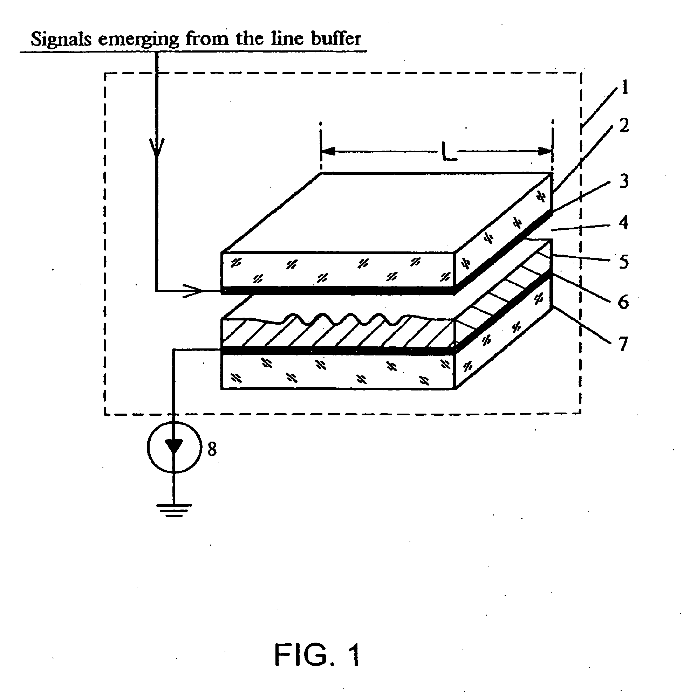

Figure 1 shows a cell (1) of a light modulator with a deformable gel layer. The cell includes a first dielectric substrate layer (7) on which is mounted a first, or support, electrode (6) followed by the gel layer (5). A signal electrode (3) mounted on a second dielectric substrate layer (2) is separated from the deformable gel layer (5) by a second deformable layer (4) which in this case is air. A support voltage unit (8) is also provided. Such a basic arrangement is described in Russian Patent 2080641 to Guscho et al.

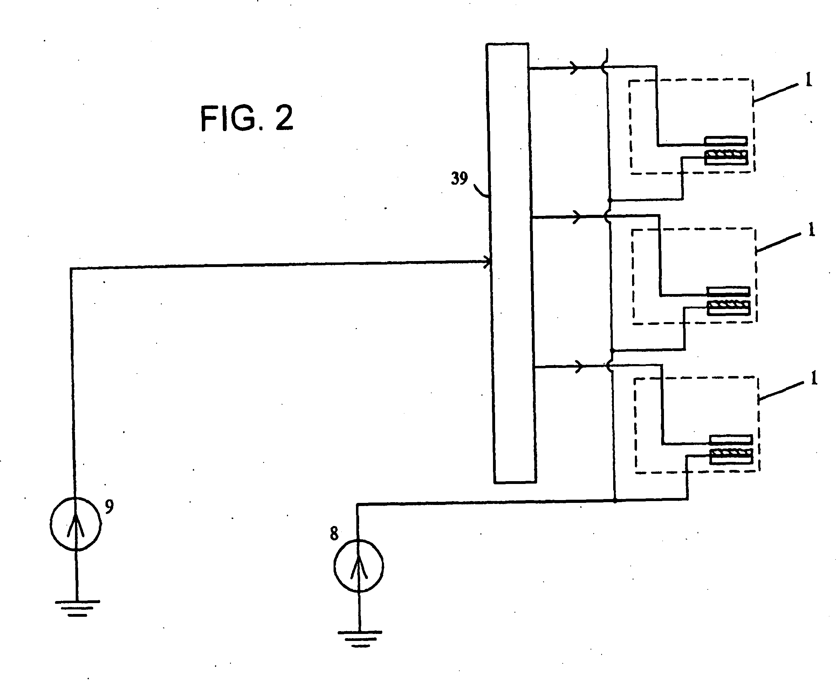

Figure 2 shows an arrangement of several such cells connected in a light modulator. A bias voltage unit (9) is also provided for the signals.

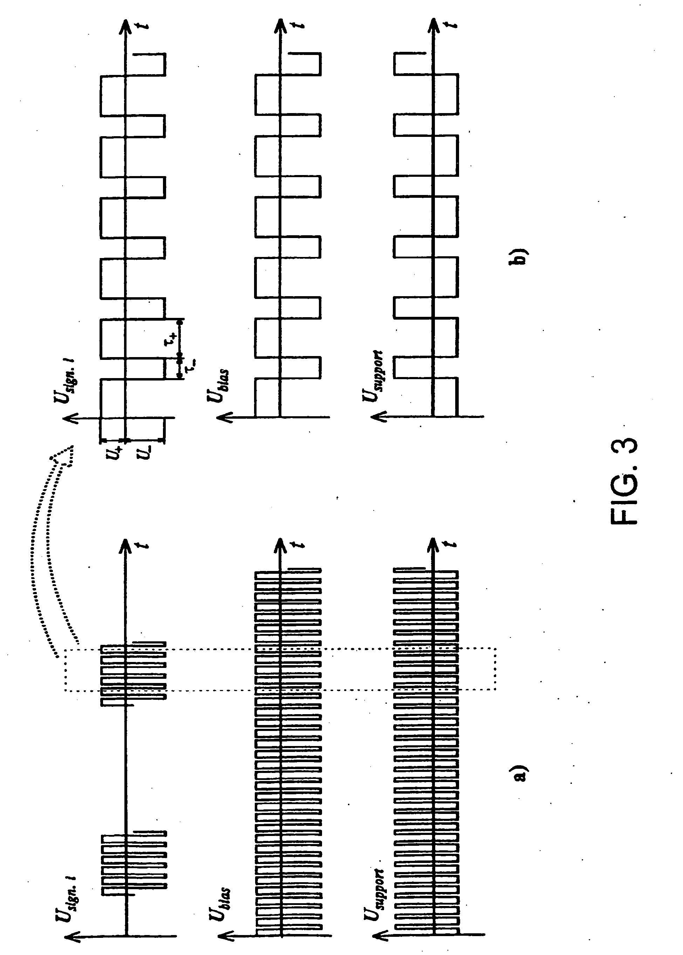

Figure 3 shows time dependencies of the voltage at the $i$-th signal electrode, $U_{sign.i}$, and at the outlets of the bias voltage ($U_{bias}$) and support voltage ($U_{support}$) units. In order to eliminate the inleakage of electric charges in the deformable gel layer, rectangular pulses to be transferred to the signal electrodes, $U_{sign.i}$, are filled with high-frequency rectangular bipolar voltage. The support voltage, $U_{support}$, and the bias voltage, $U_{bias}$, are filled with the same voltage. $U_{support}$ is antiphasic, while $U_{bias}$ is synphasic to $U_{sign.i}$. In Fig. 3b, the area demarcated with a dotted line in Fig. 3a, is shown on an enlarged scale.

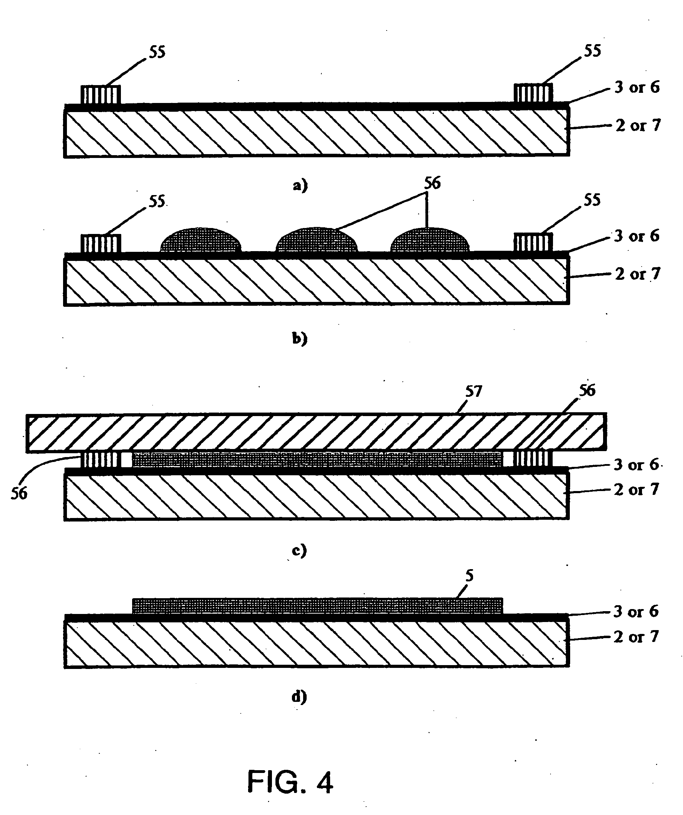

The following method, described with reference to Figure 4, may be used for preparing polyorganosiloxane-based deformable gel layers for use in the modulator. This method utilises tetraethoxysilane and tin diethyldicaprylate as a 10-30% solution of $\alpha,\omega$-dihydroxypolydimethylsiloxane having the general formula of:

$$HO\text{-}Si(CH_3)_2O[\text{-}SiO(CH_3)_2\text{-}]_nSi(CH_3)_2\text{-}OH$$

and a molar mass of $(1\text{-}2)10^4$ g/mol in polydimethylsiloxane having the formula:

$$(CH_3)_3SiO[\text{-}SiO(CH_3)_2\text{-}]_nSi(CH_3)_3$$

and a molar mass of $(0.6\text{-}1)10^3$ g/mol, at the 1:0.8-1:1.5 and 1:2 -1:5 $\alpha,\omega$-dihydroxypolydimethylsiloxane / tin diethyldi-caprylate and $\alpha,\omega$-dihydroxypolydimethylsiloxane / tetraethoxysilane molar ratios, respectively.

The reaction mixture is agitated for not less than 20 minutes and pored onto a transparent horizontal (lower) dielectric substrate (2 or 7) coated with a conducting layer (3 or 6) with subsequent application of a second substrate (57) at a definite distance from the first substrate followed by solidification of the reaction mixture and separation of the second substrate (57) from the surface of the deformable gel layer (5).

The lower substrate (2 or 7) is precoated with a substance which increases the adhesion of the deformable gel layer (5) to the lower substrate; the distance between the points to which portions of the reaction mixture have been poured and the amount of the reaction mixture in each portion (56) are varied depending on the required depth and geometric shape of the deformable gel layer (5).

The upper substrate (57) is precoated with a substance which decreases the adhesion of the deformable gel layer (5) to the upper substrate (57).

The pouring of the reaction mixture is not performed until the viscosity of a separate portion of the said mixture measured under identical atmospheric conditions (temperature, humidity, pressure) with the aid of a viscosimeter increases not less than 5-fold in comparison with the viscosity of the original solution of $\alpha,\omega$-dihydroxypolymethylsiloxane in polydimethylsiloxane.

The separation of the upper substrate (57) from the surface of the deformable gel layer (5) is not performed until the time of development of the relief determined with the aid of a reliefographic device for measuring rheological characteristics of materials (see e.g. USSR Author's certificate No. 1229646 entitled 'A device for measuring rheological characteristics of materials' to Gavrilov V.N. et al.) and under identical atmospheric conditions (temperature, humidity, pressure), for a deformable gel layer prepared from the reaction mixture poured onto a separate substrate, will be less than $3\tau$, where $\tau$ is the time of development of a relief for a given deformable gel layer (normally, a few days after the preparation of the reaction mixture) measured prior to experiment for a deformable gel layer prepared from a reaction mixture with the same concentration of all components;

the upper substrate is separated from the deformable gel layer by fixation of the latter in a horizontal position with subsequent application of uniform forces to the edge of the upper substrate in a direction perpendicular to the deformable gel layer.

The essence of the method consists in the following. The first step entails the preparation of a 10-30% solution of $\alpha,\omega$-dihydroxypolydimethylsiloxane (molecular mass = $(1\text{-}2)\cdot10^4$ g/mol) in polydimethylsiloxane (molecular mass = $(0.6\text{-}1)\cdot10^3$ g/mol). Then, tetraethoxysilane is added to the mixture as a cross-linking reagent at the $\alpha,\omega$-dihydroxypoly-dimethylsiloxane / tetraethoxysilane molar ratio of 1:2 - 1:5; tin diethyldicaprylate is added as a catalyst at the $\alpha,\omega$-dihydroxypolydimethylsiloxane / tin diethyldicaprylate molar ratio of 1:0.8 - 1:1.5. The resulting mixture is agitated for 20-40 minutes with a special device (electromechanical stirrer). Gel formation begins immediately after addition of the catalyst and the crosslinking reagent; their reaction with α,ω-dihydroxypolydimethylsiloxane results in the crosslinking of α,ω-dihydroxypoly-dimethylsiloxane molecules at terminal hydroxy groups.

At the beginning, the crosslinking occurs in those portions of the reaction mixture that are spatially separated from one another. At this stage, the reaction mixture represents a fluid whose viscosity increases gradually. After some time (which varies from tens of minutes to several hours depending on the concentration of reaction components), crosslinked α,ω-dihydroxypolydimethylsiloxane molecules begin to be formed across the whole volume of the reaction mixture. This state is known as a *gel point+ where a mixture ceases to be a fluid because its viscosity approaches infinity, as a result of which the said mixture acquires elastic properties. Within the next 1-3 days, the density of the network formed by the crosslinked molecules increases and so does its elasticity. If in the process of crosslinking (i.e., prior to the onset of the gel point) the fluid mixture is given the required shape, the crosslinked gel will also have this shape.

The pouring of the reaction mixture is performed in the following way. At first, the solution of a substance increasing the adhesion of the deformable gel layer to the lower substrate is poured onto a separate clean plate fixed on a strictly horizontal surface. Several seconds after the solvent evaporation, a thin film begins to be formed which increases the adhesion of the deformable gel layer to the underlying substrate.

Then the lower substrate is coated with the stirred-up mixture consisting of the polymer, the solvent, the catalyst and the crosslinking reagent. The mixture is covered with a second glass substrate at a predetermined distance between the substrates (the latter can be attained through the insertion of rigid spacers (55) between the substrates as illustrated in Fig. 4).

Experiments have shown that if the upper substrate is made of glass and is not pretreated with any reagents, in 10-30% of cases its separation will result in partial adhesion of the gel to the upper substrate which inevitably spoils the surface of the gel and makes it unsuitable for use in reliefographic devices. In the proposed method, the upper substrate is precoated with a substance which diminishes the adhesion of the deformable gel layer to the upper substrate.

The shape of the deformable gel layer is a crucial factor which determines its quality. In many reliefographic devices, deformable gel layers should have an oval (close to rectangular) shape within the limits of a certain working area on the lower substrate. A drift of the gel beyond this area and considerable deformation of its shape are inadmissible but difficult to avoid, if the reaction mixture is poured out immediately after addition of the catalyst and the cross-linking reagent when the viscosity of the fluid mixture is still too low . Even minor tilting of the lower substrate prior to the onset of the gel point may cause a drift of the gel beyond the limits of the working area (for example, the approximate linear dimensions of the gel layer and the working area are 50 x 25 mm$^2$ and 40 x 20 mm$^2$, respectively). In the prototype method, the pouring is begun 10-15 minutes prior to the onset of the gel point. In this case, the drift is insignificant due to high viscosity of the reaction mixture and is completed within 10-15 minutes (but not several hours). However, as stated hereinbefore, in this case, too, it is difficult to determine the exact time for pouring the mixture before the onset of the gel point, since in each concrete case special experiment is necessary in order to prepare the gel from a mixture with the same concentration of components and under identical atmospheric conditions (temperature, humidity, pressure). Therefore, in the proposed method the pouring of the reaction mixture is not performed until the viscosity of a separate portion of the reaction mixture measured by the conventional procedure (viscosimeter) and under identical atmospheric conditions (temperature, humidity, pressure) increases not less than 5-fold in comparison with the viscosity of the original solution of α,ω-dihydroxypolydimethylsiloxane in polydimethylsiloxane, which is sufficient to minimise the drift of the reaction mixture placed between two substrates prior to the onset of the gel point. As for the gel point, it can be reached at various times after the onset of pouring and depends on the concentration of reaction components, temperature, humidity and atmospheric pressure (normally, from 20-30 minutes to several hours after preparation of the reaction mixture).

And, finally, in order to confer on the gel a random (but not circular) shape, in the proposed method the reaction mixture is poured out by portions of strictly defined volume (e.g., with the aid of a micropipette) to definite points on the lower substrate surface. The volume of the reaction mixture in each portion and the distance between the points to which the reaction mixture is poured, depend on the shape of the deformable gel layer (after covering with the upper substrate, separate drops begin to flow together to form a uniform layer).

Within the next 1-3 days, the polymeric net becomes more compact; the elasticity of the medium increases, correspondingly, as a result of which final solidification of the gel layer takes place. Then, the upper and lower substrates are separated from each other, and the surface of the deformable gel layer (5), which mimics in every detail the surface of the upper substrate, remains to be bound to the lower substrate. The prototype method does not specify the criteria used to estimate the degree of solidification of the deformable gel layer (5) but some experimental data currently available suggest that if the upper substrate is separated too early, partial adhesion of certain fragments of the said layer (5) to the upper substrate may occur which irreversibly worsens the properties of the gel layer. In the proposed method, the degree of solidification of the deformable gel layer (5) is determined under strictly defined conditions (T=20°C, P=10$^5$ Pa) with the aid of a special reliefographic device for measuring rheological characteristics of materials produced as thin films having a free surface. See e.g. USSR Author's certificate No. 1229646 entitled 'A device for measuring rheological characteristics of materials' to Gavrilov V.N. et al. In these measurements, a deformable gel layer is prepared from the same components by pouring a small portion of the reaction mixture onto the surface of a separate substrate without covering with a second substrate (so-called "free pouring"). The viscosity and elasticity of the said portion will change in approximately the same way as in the case of the reaction mixture used for preparing deformable gel layers (5) and placed between two substrates. The time for development of a relief, $\tau$, as a result of application of a step-like inhomogeneous electric field to the free surface of the deformable gel layer (5) seems to be the most convenient criterion for estimating the degree of solidification of the said layer (5). This parameter ($\tau$), which can be easily measured with the aid of a reliefographic device mentioned above, depends not only on the time elapsed from the moment of pouring of the reaction mixture but also on the polymer concentration in the reaction mixture, i.e., the higher the concentration, the faster is the development of the relief provided that all other conditions are identical. In the proposed method, $\tau$ is measured previously for a deformable gel layer (5) prepared from a reaction mixture with the same concentration of all components. The separation of the upper and lower substrates is not performed until the time of development of a relief for the deformable gel layer (5) prepared from the said mixture by its free pouring onto a separate substrate (determined with the aid of a reliefographic device for measuring rheological characteristics of materials and under identical atmospheric conditions (temperature, humidity, pressure), will be less than $3\tau$.

Experimental data suggest that deformable gel layers (5) are especially well separated from the upper substrate on the approximately 24th hour after their preparation. In 95-100% of cases, the surface of the said layer (5) is fully separated from the upper substrate provided that all other conditions specified are observed.

Besides, effective separation of deformable gel layers (5) from upper substrates depends on the method used for their separation. However, if the upper substrate is separated by applying a torsional force relative to the lower substrate, the deformable gel layer (5) will most likely be destroyed. In the proposed method, the separation of the said substrates is performed by fixation of the lower substrate in a horizontal position and application of a uniform force to the edge of one of the sides of the upper substrate in a direction perpendicular to the deformable gel layer. According to the available experimental data, in 95-100% of cases the surface of the deformable gel layer (5) is fully separated from the upper substrate provided that all other conditions are observed.

In order to protect the surface of the deformable gel layer (5) from dust and oxidation with air oxygen and moisture, not later than 3-5 days after the pouring of the reaction mixture the deformable gel layer (5) may be exposed to the atmosphere of an inert gas and is encapsulated.

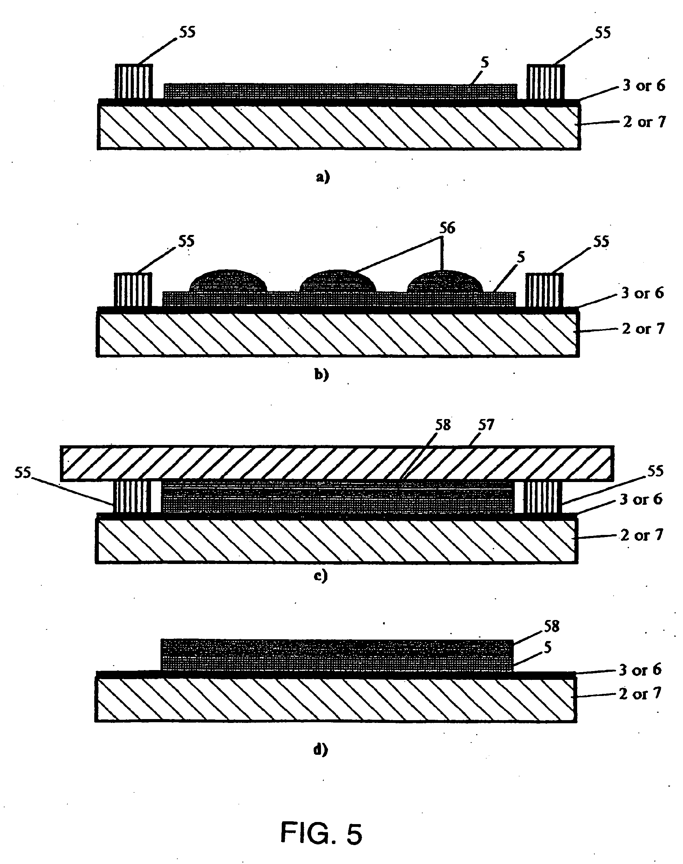

According to current knowledge, the operation of light modulators (14) with deformable gel layers (5) is usually associated with charge inleakage due to the presence of gel-contaminating particles (e.g., low-molecular-weight ionised admixtures), polarisation, electron injection from the support electrode, etc. The presence of electric charges on the surface of deformable gel layers (5) increases their sensitivity to voltages applied to the signal electrodes (3). However, accumulation of electric charges is a slow process in comparison with the mechanical formation and erasure of reliefs. In order to increase the operation rate of the light modulator (14) with a charged surface of the deformable gel layer (5), it is preferred to coat the said layer (5) with an additional conducting layer (58) prepared as described above. The said layer (58) is prepared in exactly the same way as the first, non-conducting layer, the sole difference being that not more than three molar per cent of $\alpha,\omega$-dihydroxypoly-dimethylsiloxane molecules with terminal groups containing Li, Zn, Na or other metals are added to polydimethylsiloxane or $\alpha,\omega$-dihydroxypolydimethylsiloxane prior to the preparation of the conducting gel layer. The process of application of an additional conducting gel layer (58) is depicted in Fig. 5.

The support electrode (6) of the lower substrate may be electrically conjugated with the additional conducting gel layer (58) after separation of the said layer from the upper substrate (57) in order to prevent the inleakage of electric charges into the said layer (58). As a result, the electric charges will flow into the support electrode (6) and will not accumulate in the said layer (58).

According to the available theoretical and experimental data, some parts of the relief underneath adjacent signal electrodes (3) may interact with one another due to the overlapping of the protrusions formed by the said electrodes on the relief surface (3). A possible explanation of this fact is that the relief induced by an electric potential generated on one of the said electrodes (3) is not localised strictly underneath this electrode but occupies some part of the deformable gel layer (5) surface whose width is several times greater than the width of a signal electrode (3). The overlapping of the reliefs underneath the said electrodes (3) causes non-linear distortions in the output optical characteristics of the light modulator (14).

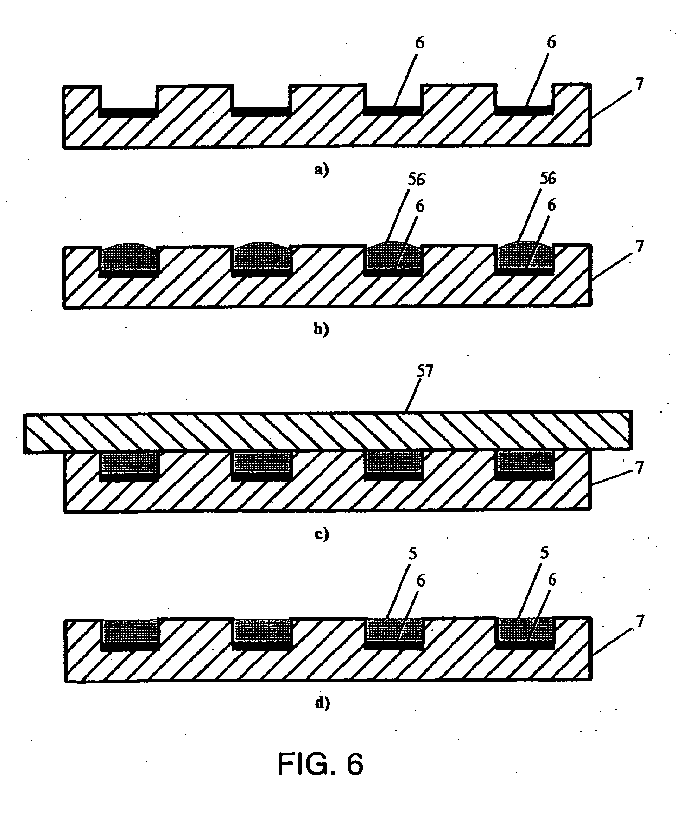

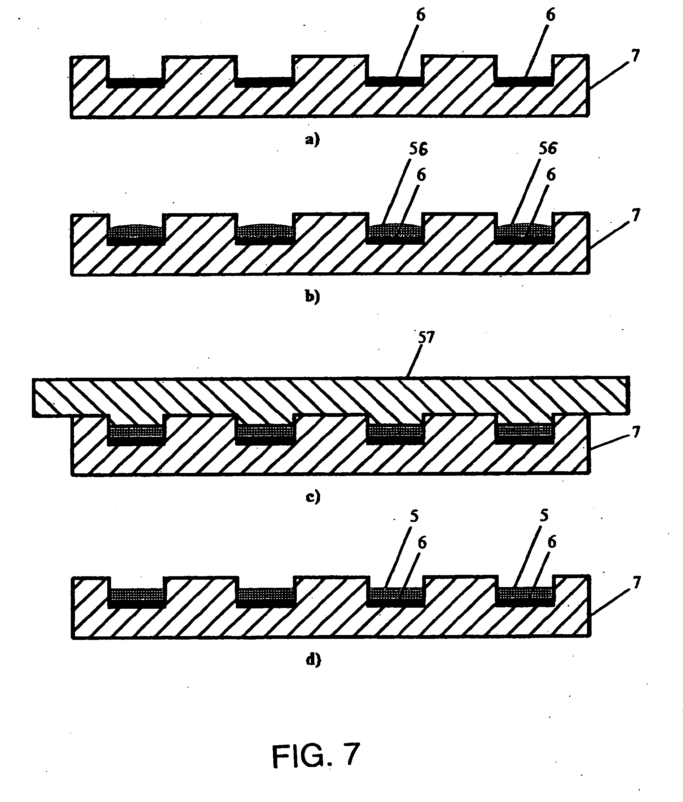

With reference to Figures 6 and 7, to eliminate these distortions, the deformable gel layer may be coated onto the dielectric substrate (7) of the support electrode made embossed with a row of grooves in order to exclude mutual interactions between the deformable gel layers (5) in adjacent cells. The upper substrate (57) is made either planar (Fig. 6) so that the free surface of the said layer (5) in each cell (1) coincides with the surface of the protruding parts on the lower substrate, or embossed (fig. 7); in the latter case the deformable gel layer (5) in each cell is "sunk" into the grooves of the lower substrate (7).

In order to diminish the size of the single-colour transformable optical system, the lower (2 or 7) and upper (57) substrates may be made with a cylindrical or spherical surface featuring the same radius of curvature or as a curved surface of any other shape.

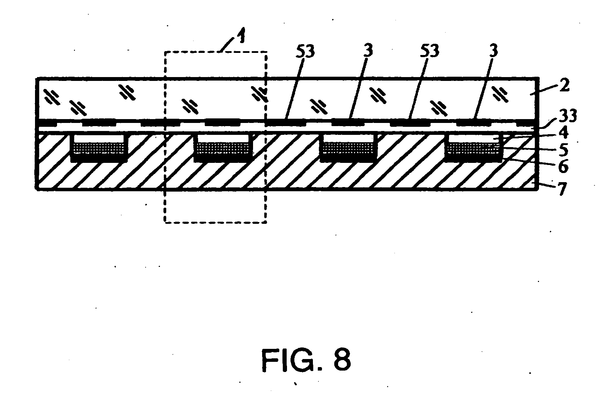

In Fig. 8, the dielectric substrate (2) of the signal electrode has been made common for all cells (1) of the light modulator (14) and is in close contact with the protrusions of the dielectric substrate (7) which is also common for all cells. The air gap between the protective dielectric layer (33) of the dielectric substrate (2) and the surface of the deformable gel layer (5) represents the deformable layer (4).

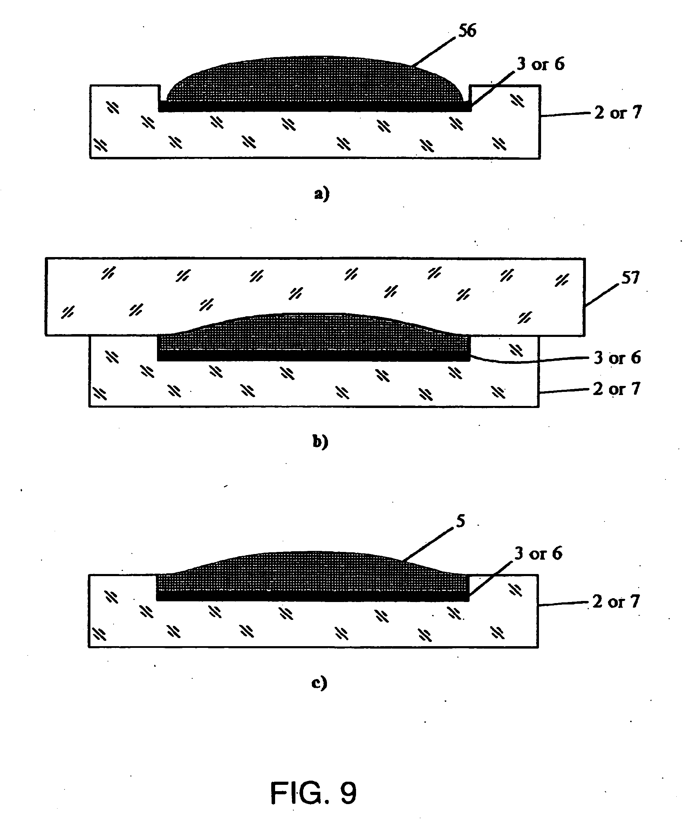

Second, and with reference to Figure 9, the upper substrate (57) can be made embossed in order to confer the required contours such as a lens to the surface of the deformable gel layer (5).

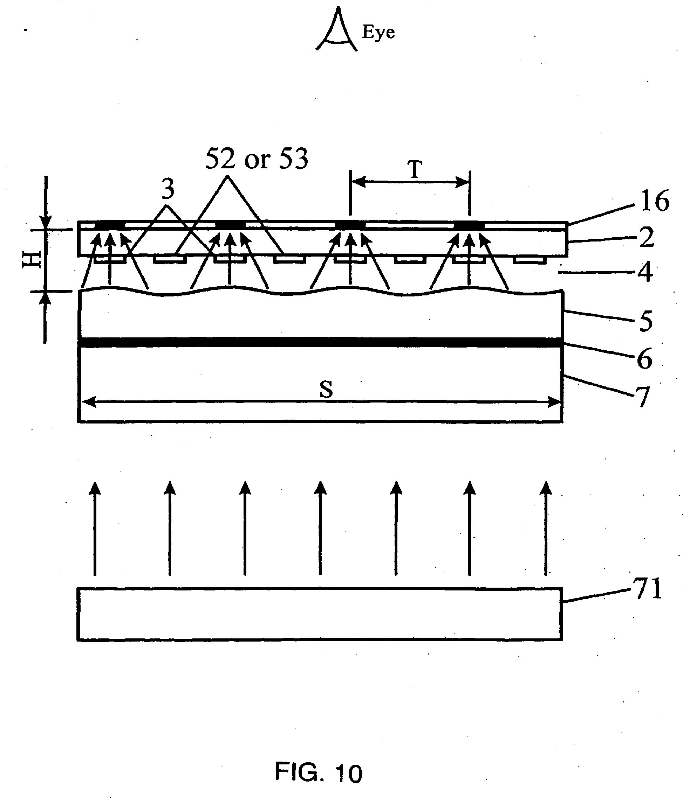

Figure 10 is an embodiment of a display panel for viewing by the naked eye comprising a light modulation system according to the present invention. This is in the form of a light modulator having at least one cell which comprises two deformable dielectric layers (4, 5) which meet at an interface, at least one (5) of which is a relief forming gel, a first electrode (6) on one side of the layers and signal electrode (3) on the other side of the layers, there being means for providing signals to the signal electrodes to create reliefs in the cells on the gel surfaces.

The light modulator is constructed to satisfy the requirements that:

$$0.01d_1 < d_2 < d_1$$

$$d_2 > \lambda / (20 \mid \eta_1 - \eta_2 \mid )$$

$$\mid \eta_1 - \eta_2 \mid > 0.1$$

$$t_\rho > 0.01\, \tau_m$$

$$0.1d_1 < L < 10\, d_1$$

in which $d_2$ is the distance between the signal electrode and the interface between the deformable layers; $d_1$ is the distance between the first electrode and the interface between the deformable layers; $\lambda$ is the wavelength of light with which the modulator is to be used; $\eta_1$ is the refractive coefficient of one of the deformable layers; $\eta_2$ is the refractive coefficient of the other of the deformable layers; $t_\rho$ is the duration of voltage pulses to be applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells.

Between adjacent portions of the signal electrode (3) there are provided additional electrode portions (52, 53) arranged to establish constant ground potential between the adjacent signal electrode portions. The arrangement is such that a distributed light source (71) may be placed on one side of the cell so that the illuminating surface is parallel to the deformable layers and the incident light is perpendicular to the deformable layers, wherein the signal electrode in the cell comprises a plurality of laterally spaced portions and stop-diaphragm means (16) is arranged in the cell parallel to the layers, the stop-diaphragm means consisting of periodically repeated opaque parts which coincide either with the maxima $I_{max}$ or with the minima $I_{min}$ of the outgoing light intensity, and the repetition period $T$ of the opaque parts being equal to the gel layer surface relief period.

The distance $H$ from the stop-diaphragm to the gel layer relief surface and the maximum value of the modulation coefficient

$$K_{max} = \frac{I_{max} - I_{min}}{I_{max} + I_{min}}$$

are determined from the Fresnel-Kirchhoff integral under the conditions

$$H \leqslant \frac{5 \cdot S^2}{\lambda}, \qquad S \geq 3T$$

in which S is the width of a cell;

T is the period of the relief on the interface between the deformable layers and the period of the signal electrode portions; and

$\lambda$ is the wavelength of the incident light.

The calculation of a feasible set of parameters providing the operation of the light modulator as a display panel have been done for one-dimensional harmonic relief with the use of the Fresnel integral (a particular case of the Fresnel-Kirchhoff integral) for the intensity of light $I(x,h)$ at any distance h from the relief:

$$I(x,h) = \left| \frac{1}{\lambda h} \int_{-\frac{S}{2}}^{\frac{S}{2}} u_0(\xi) \cdot exp\left[ -j \frac{\pi}{\lambda h}\left(\xi^2 - x\xi\right)\right] d\xi \right|^2$$

in which $x$ and $\xi$ are the coordinates along the direction parallel to deformable layers and the stop-diaphragm, $u_0(\xi)=exp$

$[jA(\xi)]$ is the phase transfer function of the harmonic relief $A(\xi) = A_0 \cos\left(\frac{2\pi}{T}\xi\right)$, in which $A_0$ is the relief depth.

That calculation suggests the following: T=100 $\mu$m, $A_0$=0.1-0.15 $\mu$m; $\lambda$=0.5 $\mu$m, possible values $H_1$ ... $H_n$ lie in the range 5-25 mm . The calculations showed that the Fresnel diffraction region comprises several (but not one, as is the case with an ordinary lens) light-focusing planes.

In the arrangement of Figure 10, all layers in each cell should be transparent, apart from the opaque parts of the stop diaphragm (16) for stopping light focused by relief protrusions. The opaque parts correspond to the maxima of light intensity, as shown. The panel is to be viewed by the naked eye on the side remote from the light source (71).

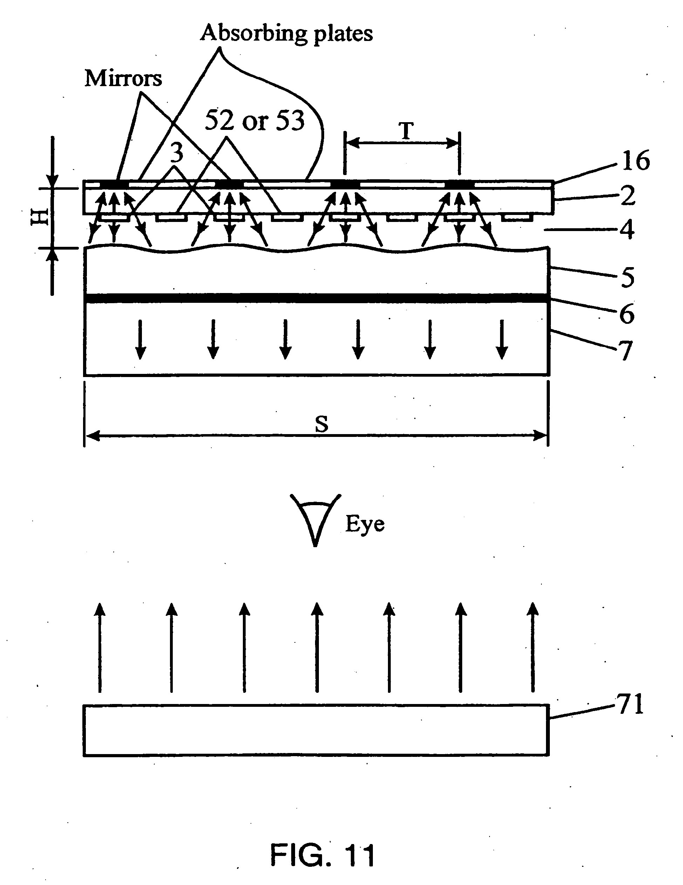

In Figure 11, the arrangement is similar but the panel is to be viewed by the naked eye from the same side as the light source (71). In this case the opaque portions of the stop diaphragm (16) are reflective and act as mirrors. The regions between these are made light absorbent.

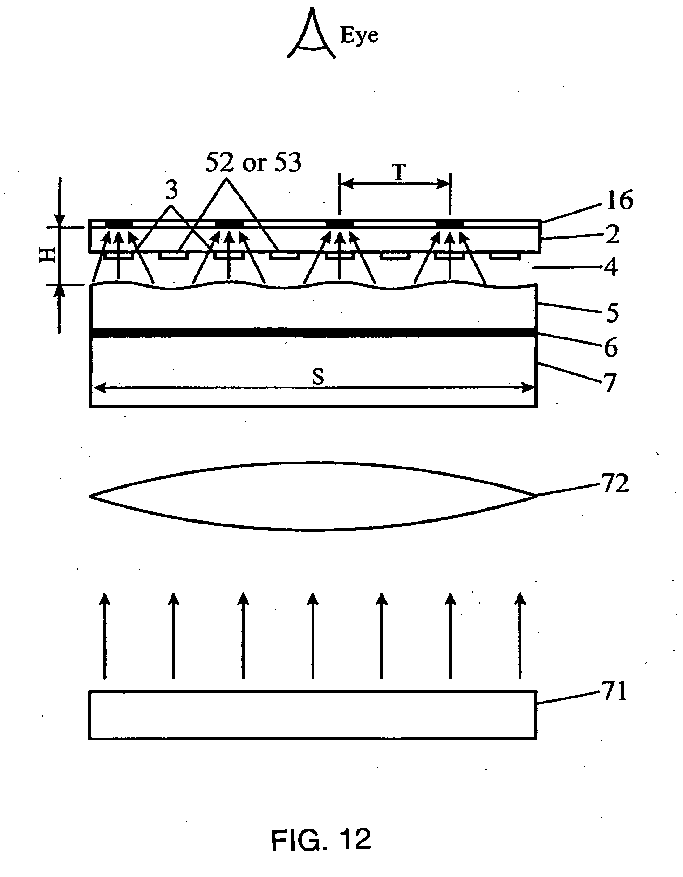

In Figure 12, which is similar to the system of Figure 10, an additional microlens (72) is provided between the light source 971) and the deformable layers (4, 5) so as to improve the concentration of incident light on the gel layer.

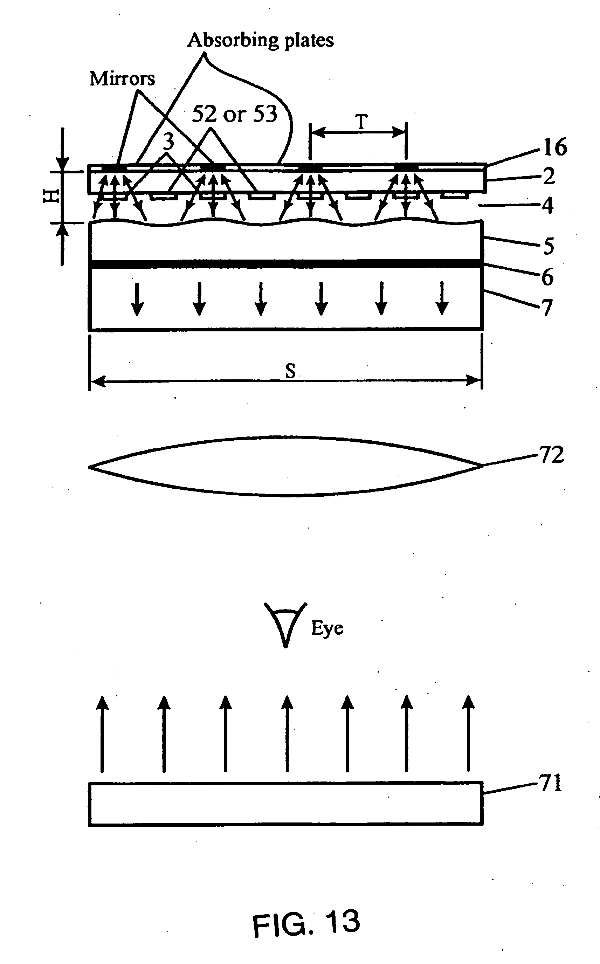

In Figure 13, a system similar to that of Figure 11 is illustrated, but with the addition of the microlens (72).

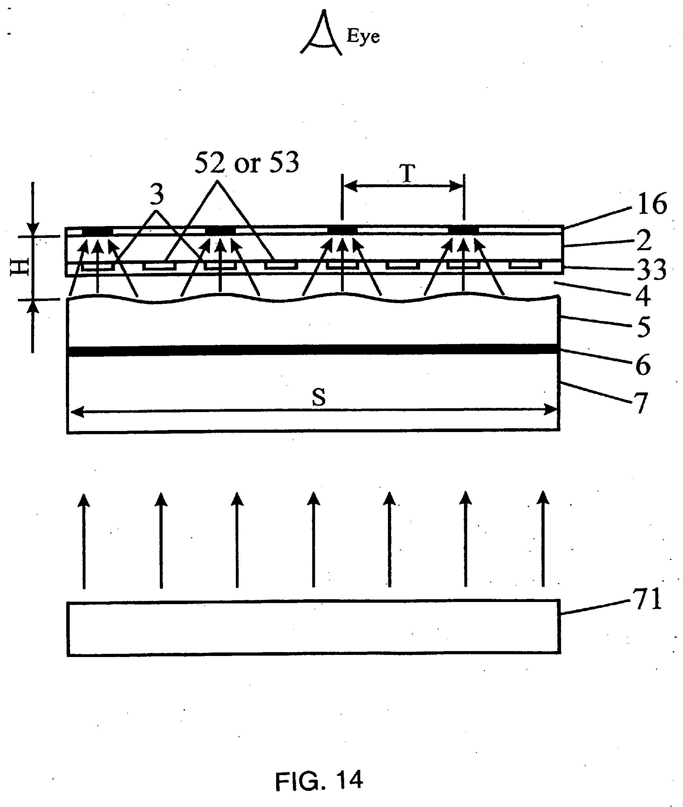

Figure 14 shows an arrangement similar to that of Figure 10, but with the addition of a transparent protective dielectric layer (33).

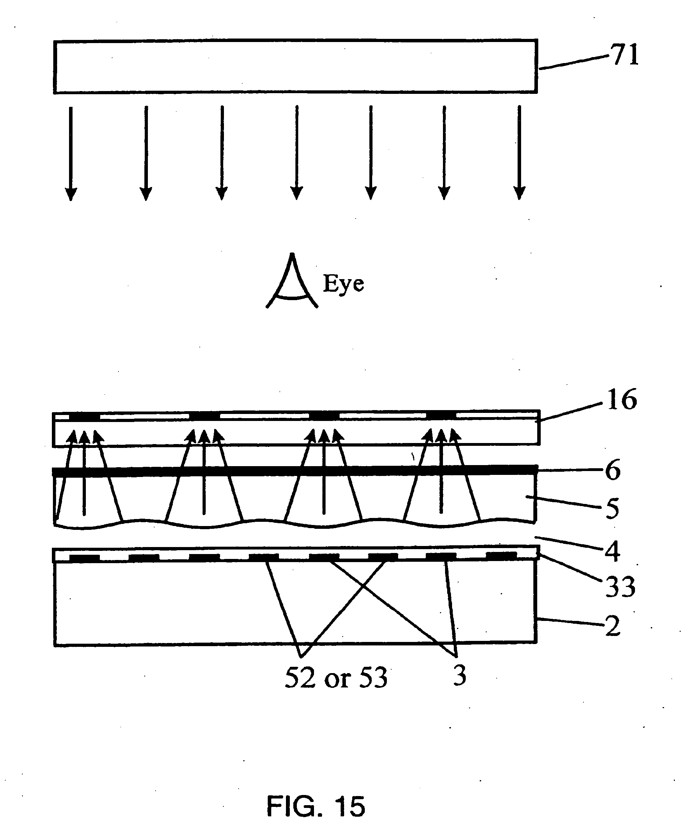

Figure 15 shows an arrangement in which a reflective and protective dielectric layer (33) is provided. In this arrangement the panel is viewed from the same side as the light source (71), which could be daylight from the sun or light from a lamp. In this arrangement, light passes through clear portions of the diaphragm (16) and is reflected back by the layer (33).

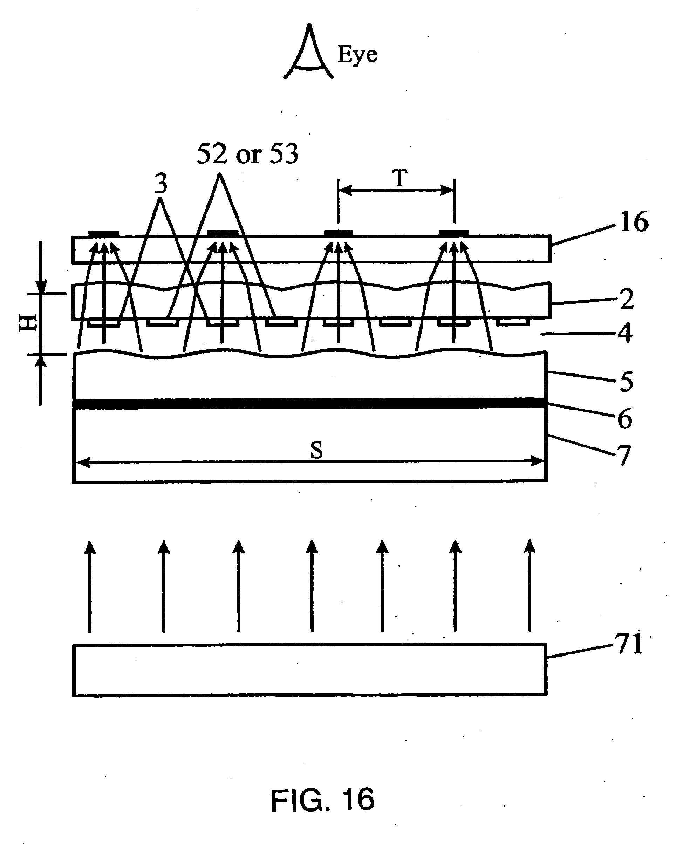

Figure 16 shows an arrangement in which the dielectric substrate (2) for the signal and additional ground electrodes is transparent and curved so as to form microlenses to focus the light from each relief protrusion to the corresponding opaque part of the diaphragm (16). There is a microlens for each protrusion.

**Claims**

1. A light modulation system comprising a light modulator having at least one cell (1) which has two deformable dielectric layers (4, 5) which meet at an interface, at least one of which (5) is a relief forming gel, a first electrode (6) on one side of the layers, and a signal electrode (3) on the other side of the layers, the light modulation system further comprising means (8) for supplying signal voltage pulses to the signal electrode; wherein

(a) the following criteria are met:

$$0.01d_1 < d_2 < d_1$$

$$d_2 > \lambda / (20 \, | \, \eta_1 - \eta_2 \, |)$$

$$| \, \eta_1 - \eta_2 \, | > 0.1$$

$$t_\rho > 0.01 \, \tau_m$$

$$0.1d_1 < L < 10 \, d_1$$

in which $d_2$ is the distance between the signal electrode (3) and the interface between the deformable layers (4, 5) ; $d_1$ is the distance between the first electrode (6) and the interface between the deformable layers; $\lambda$ is the wavelength of light with which the modulator is used; $\eta_1$ is the refractive coefficient of one of the deformable layers; $\eta_2$ is the refractive coefficient of the other of the deformable layers; $t_\rho$ is the duration of voltage pulses applied to the signal electrodes; $\tau_m$ is the time constant of mechanical relaxation of the relief formed at the interface between the layers; and L is the minimum dimension of a single signal electrode (3) in a direction parallel to the layers or, in the case of a plurality of cells, the minimum spatial period between electrodes in adjacent cells; and

(b) the signal electrode (3) comprises a plurality of laterally spaced portions and a stop-diaphragm means (16) is arranged in the cell parallel to the dielectric layers (4, 5), the stop-diaphragm means consisting of periodically repeated opaque parts which coincide either with the maxima $I_{max}$ or with the minima $I_{min}$ of the outgoing light intensity, and the repetition period T of the opaque parts being equal to the surface relief period of the relief forming gel layer (5), such that when said light modulation system is incorporated in a display panel, with a distributed light source being placed on one side of the light modulator, the light modulator is adapted to create images which are viewable by the naked eye.

2. A light modulation system as claimed in claim 1, wherein between adjacent portions of the signal electrode (3) there are provided additional electrode portions (52, 53) which establish constant ground potential between the adjacent signal electrode portions.

3. A light modulation system as claimed in claim 1 or 2, wherein the distance H from the stop-diaphragm (16) to the gel layer (5) relief surface and the maximum value of the modulation coefficient

$$K_{max} = \frac{I_{max} - I_{min}}{I_{max} + I_{min}}$$

are in accordance with the Fresnel-Kirchhoff integral under the conditions

$$H \leqslant \frac{5 \cdot S^2}{\lambda}, \qquad S \geq 3T$$

in which:

S is the width of a modulator cell;
T is the period of the relief on the interface between the deformable layers and the period of the signal electrode portions; and
$\lambda$ is the wavelength of the incident light.

4. A light modulation system as claimed in claim 1, 2 or 3, wherein the relief forming gel (5) is a polyorganosiloxane gel.

5. A light modulation system as claimed in any preceding claim, wherein one (4) of the two deformable dielectric layers is air.

6. A display panel for viewing by the naked eye, which incorporates a light modulation system as claimed in any preceding claim and a distributed light source placed on one side of the modulator.

7. A method of modulating light comprising the steps of providing a display panel for viewing by the naked eye, said display panel including a light modulator, and a distributed light source placed on one side of the light modulator, and creating images on said light modulator which are viewable by the naked eye, wherein:

(a) the light modulator comprises at least one cell (1) which has two deformable dielectric layers (4, 5) which meet at an interface, at least one of which (5) is a relief forming gel, a first electrodes (6) on one side of the layers and a signal electrode (3) on the other side of the layers to which signal pulses are applied;
(b) the following criteria are met:

$$0.01d_1 < d_2 < d_1$$

$$d_2 > \lambda / (20 \, | \, \eta_1 - \eta_2 \, |)$$

$$| \, \eta_1 - \eta_2 \, | > 0.1$$

$$t_\rho > 0.01 \, \tau_m$$

$$0.1d_1 < L < 10 \, d_1$$

in which $d_2$ is the distance between the signal electrode (3) and the interface between the deformable layers (4, 5) ; $d_1$ is the distance between the first electrode (6) and the interface between the deformable layers; $\lambda$ is the wavelength of light with which the modulator is used; $\eta_1$ is the refractive coefficient of one of the deformable layers; $\eta_2$ is the refractive coefficient of the other of the deformable layers; $t_\rho$ is the duration of voltage pulses applied to the signal electrodes; $\tau_m$ is the time constant of mechanical relaxation of the relief formed at the interface between the layers; and L is the minimum dimension of a single signal electrode (3) in a direction parallel to the layers or, in the case of a plurality of cells, the minimum spatial period between electrodes in adjacent cells; and
(c) the signal electrode (3) comprises a plurality of laterally spaced portions and a stop-diaphragm means (16) is arranged in the cell parallel to the dielectric layers (4, 5), the stop-diaphragm means consisting of periodically repeated opaque parts which coincide either with the maxima $I_{max}$ or with the minima $I_{min}$ of the outgoing light intensity, and the repetition period T of the opaque parts being equal to the surface relief period of the relief forming gel layer (5).

8. A method as claimed in claim 7, wherein between adjacent portions of the signal electrode (3) there are provided additional electrode portions (52, 53) which establish constant ground potential between the adjacent signal electrode portions.

**9.** A method as claimed in claim 7 or 8, wherein the distance H from the stop-diaphragm (16) to the gel layer (5) relief surface and the maximum value of the modulation coefficient

$$K_{max} = \frac{I_{max} - I_{min}}{I_{max} + I_{min}}$$

are in accordance with the Fresnel-Kirchhoff integral under the conditions

$$H \leqslant \frac{5 \cdot S^2}{\lambda}, \qquad S \geq 3T$$

in which:

S is the width of a modulator cell;
T is the period of the relief on the interface between the deformable layers and the period of the signal electrode portions; and
$\lambda$ is the wavelength of the incident light.

**10.** A method as claimed in claim 7, 8 or 9, wherein the relief forming gel (5) is a polyorganosiloxane gel.

**11.** A method as claimed in any of claims 7 to 10, wherein one (4) of the two deformable dielectric layers is air.

**Patentansprüche**

**1.** Lichtmodulationssystem mit einem Lichtmodulator mit zumindest einer Zelle (1), die zwei verformbare dielektrische Schichten (4, 5) aufweist, die sich an einer Grenzfläche berühren, wobei zumindest eine von diesen (5) ein Gel ist, das eine Entlastung bzw. Aussparung bildet, eine erste Elektrode (6) auf einer Seite der Schichten und eine Signalelektrode (3) auf der anderen Seite der Schichten, wobei das Lichtmodulationssystem weiterhin ein Mittel (8) zum Liefern von Signalspannungsimpulsen zu der Signalelektrode umfasst, wobei

(a) die folgenden Kriterien erfüllt sind:

$$0,01d_1 < d_2 < d_1$$

$$d_2 > \lambda / (20 |\eta_1 - \eta_2|)$$

$$|\eta_1 - \eta_2| > 0,1$$

$$t_p > 0,01 \ \tau_m$$

$$0,1d_1 < L < 10 \ d_1$$

wobei $d_2$ der Abstand zwischen der Signalelektrode (3) und der Grenzfläche zwischen den verformbaren Schichten (4, 5) ist, $d_1$ der Abstand zwischen der ersten Elektrode (6) und der Grenzfläche zwischen den verformbaren Schichten ist, $\lambda$ die Wellenlänge des Lichts ist, mit dem der Modulator verwendet wird, $\eta_1$ der Brechungskoeffizient von einer der verformbaren Schichten ist, $\eta_2$ der Brechungskoeffizient der anderen der verformbaren Schichten ist, $t_p$ die Dauer von Spannungsimpulsen ist, die an die Signalelektroden angelegt werden, $\tau_m$ die Zeitkonstante einer mechanischen Relaxation der Entlastung ist, die bei der Grenzfläche zwischen den Schichten gebildet ist, und L die minimale Dimension einer einzelnen Signalelektrode (3) in einer Richtung parallel zu den Schichten ist, oder in dem Fall einer Mehrzahl von Zellen die minimale räumliche Periode zwischen Elektroden in benachbarten Zellen, und

(b) die Signalelektrode (3) eine Mehrzahl von lateral beabstandeten Abschnitten umfasst und ein Stopmembranmittel (6) in der Zelle parallel zu den dielektrischen Schichten (4, 5) angeordnet ist, wobei das Stopmembranmittel aus periodisch wiederholten undurchsichtigen Teilen besteht, die entweder mit den Maxima $I_{max}$ oder mit den Minima $I_{min}$ der ausgehenden Lichtintensität übereinstimmen, und die Wiederholungsperiode T der undurchsichtigen Teile gleich der Oberflächenentlastungsperiode der Gelschicht ist, die die Entlastung bildet, so dass, wenn das Lichtmodulationssystem in einer Anzeigetafel umfasst ist, mit einer Quelle für verteiltes Licht, die an einer Seite des Lichtmodulators plaziert ist, der Lichtmodulator ausgelegt ist, Bilder zu erzeugen, die durch das bloße Auge sichtbar sind.

2. Lichtmodulationssystem nach Anspruch 1, bei dem zwischen benachbarten Abschnitten der Signalelektrode (3) zusätzliche Elektrodenabschnitte (42, 53) vorgesehen sind, die ein konstantes Erdungspotential zwischen den benachbarten Signalelektrodenabschnitten aufbauen.

3. Lichtmodulationssystem nach Anspruch 1 oder 2, bei dem der Abstand H von der Stopmembran (16) zu der Entlastungsoberfläche der Gelschicht (5) und der maximale Wert des Modulationskoeffizients

$$K_{max} = \frac{I_{max} - I_{min}}{I_{max} + I_{min}}$$

in Übereinstimmung mit dem Fresnel-Kirchhoff Integral unter den Bedingungen

$$H \lesssim \frac{5 \cdot S^2}{\lambda}, \quad S \geq 3T$$

sind, wobei:

S die Breite einer Modulatorzelle ist,
T die Periode der Entlastung auf der Grenzfläche zwischen den verformbaren Schichten und der Periode der Signalelektrodenabschnitte ist, und
$\lambda$ die Wellenlänge des einfallenden Lichts ist.

4. Lichtmodulationssystem nach Anspruch 1, 2 oder 3, bei dem das die Entlastung bildende Gel (5) ein Polyorganosiloxan-Gel ist.

5. Lichtmodulationssystem nach einem der vorstehenden Ansprüche, bei dem eine (4) der beiden verformbaren dielektrischen Schichten Luft ist.

6. Anzeigetafel zum Betrachten durch das bloße Auge, die ein Lichtmodulationssystem nach einem der vorstehenden Ansprüche und eine Quelle für verteiltes Licht umfasst, die auf einer Seite des Modulators angeordnet ist.

7. Verfahren zum Modulieren von Licht mit den Schritten des Bereitstellens einer Anzeigetafel zum Betrachten durch das bloße Auge, wobei die Anzeigetafel einen Lichtmodulator und eine Quelle für verteiltes Licht umfasst, die auf einer Seite des Lichtmodulators angeordnet ist, und des Erzeugens von Bildern auf dem Lichtmodulator, die durch das bloße Auge sichtbar sind, wobei:

(a) der Lichtmodulator zumindest eine Zelle (1) umfasst, die zwei verformbare dielektrische Schichten (4, 5) aufweist, die sich an einer Grenzfläche berühren, wobei zumindest eine von diesen (5) ein Gel ist, das eine Entlastung bildet, eine erste Elektrode (6) auf einer Seite der Schichten und eine Signalelektrode (3) auf der anderen Seite der Schichten, an die Signalimpulse angelegt werden, wobei

(b) die folgenden Kriterien erfüllt sind:

$$0,01 d_1 < d_2 < d_1$$

$$d_2 > \lambda / (20 |\eta_1 - \eta_2|)$$

$$|\eta_1 - \eta_2| > 0,1$$

$$t_p > 0,01 \tau_m$$

$$0,1 d_1 < L < 10\ d_1$$

wobei $d_2$ der Abstand zwischen der Signalelektrode (3) und der Grenzfläche zwischen den verformbaren Schichten (4, 5) ist, $d_1$ der Abstand zwischen der ersten Elektrode (6) und der Grenzfläche zwischen den verformbaren Schichten ist, $\lambda$ die Wellenlänge von Licht ist, mit dem der Modulator verwendet wird, $\eta_1$ der Brechungskoeffizient einer der verformbaren Schichten ist, $\eta_2$ der Brechungskoeffizient der anderen der verformbaren Schichten ist, $t_p$ die Dauer von Spannungsimpulsen ist, die an die Signalelektroden angelegt werden, $\tau_m$ die Zeitkonstante einer mechanischen Relaxation der Entlastung ist, die bei der Grenzfläche zwischen den Schichten gebildet wird, und L die minimale Dimension einer einzelnen Signalelektrode (3) in einer Richtung parallel zu den Schichten ist oder in dem Fall einer Mehrzahl von Schichten die minimale räumliche Periode zwischen Elektroden in benachbarten Zellen,

(c) die Signalelektrode (3) eine Mehrzahl von lateral beabstandeten Abschnitten umfasst und ein Stopmembranmittel (16) in der Zelle parallel zu den dielektrischen Schichten (4, 5) angeordnet ist, das Stopmembranmittel aus periodisch wiederholten undurchsichtigen Teilen besteht, die entweder mit den Maxima $I_{max}$ oder mit den Minima $I_{min}$ der ausgehenden Lichtintensität übereinstimmen, und die Wiederholungsperiode T der undurchsichtigen Teile gleich der Oberflächenentlastungsperiode der Gelschicht, die die Entlastung bildet, ist.

8. Verfahren nach Anspruch 7, bei dem zwischen benachbarten Abschnitten der Signalelektrode 3 zusätzliche Elektrodenabschnitte (52, 53) vorgesehen sind, die ein konstantes Erdungspotential zwischen den benachbarten Signalelektrodenabschnitten aufbauen.

9. Verfahren nach Anspruch 7 oder 8, bei dem der Abstand H von der Stopmembran (16) zu der Entlastungsoberfläche der Gelschicht (5) und der maximale Wert des Modulationskoeffizients

$$K_{max} = \frac{I_{max} - I_{min}}{I_{max} + I_{min}}$$

in Übereinstimmung mit dem Fresnel-Kirchhoff Integral unter den Bedingungen

$$H \lesssim \frac{5 \cdot S^2}{\lambda}, \quad S \geq 3T$$

sind, wobei:

$S$ die Breite einer Modulatorzelle ist,
$T$ die Periode der Entlastung auf der Grenzfläche zwischen den verformbaren Schichten und der Periode der Signalelektrodenabschnitte ist, und
$\lambda$ die Wellenlänge des einfallenden Lichts ist.

**10.** Verfahren nach Anspruch 7, 8 oder 9, bei dem das Gel (5), das die Entlastung bildet, ein Polyorganosiloxan-Gel ist.

**11.** Verfahren nach einem der Ansprüche 7 bis 10, bei dem eine (4) der beiden verformbaren dielektrischen Schichten Luft ist.

**Revendications**

**1.** Système de modulation de lumière comprenant un modulateur de lumière ayant au moins une cellule (1) qui a deux couches diélectriques déformables (4, 5) qui se rencontrent à une interface, au moins l'une d'entre elles (5) étant un gel de formation de relief, une première électrode (6) d'un côté des couches, et une électrode de signal (3) de l'autre côté des couches, le système de modulation de lumière comprenant en outre des moyens (8) pour fournir des impulsions de tension de signal à l'électrode de signal ; dans lequel

(a) les critères suivants sont remplis :

$$0,01\ d_1 < d_2 < d_1$$

$$d_2 > \lambda\ /\ (20|\eta_1 - \eta_2|)$$

$$|\eta_1 - \eta_2| > 0,1$$

$$t_\rho > 0,01\tau_m$$

$$0,1\ d_1 < L < 10\ d_1$$

où $d_2$ est la distance entre l'électrode de signal (3) et l'interface entre les couches déformables (4, 5) ; $d_1$ est la distance entre la première électrode (6) et l'interface entre les couches déformables ; $\lambda$ est la longueur d'onde de lumière avec laquelle le modulateur est utilisé ; $\eta_1$ est le coefficient de réfraction de l'une des couches déformables ; $\eta_1$ est le coefficient de réfraction de l'autre couche déformable ; $t_\rho$ test la durée des impulsions de tension appliquées aux électrodes de signal ; $\tau_m$ est la constante de temps du relâchement mécanique du relief formé à l'interface entre les couches ; et L est la dimension minimale d'une électrode de signal unique (3) dans une direction parallèle aux couches ou, dans le cas d'une pluralité de cellules, la période spatiale minimale entre des électrodes dans des cellules adjacentes ; et

(b) l'électrode de signal (3) comprend une pluralité de portions espacées latéralement et un moyen de diaphragme d'arrêt (16) est agencé dans la cellule parallèlement aux couches diélectriques (4, 5), les moyens de diaphragme d'arrêt consistant en des parties opaques répétées périodiquement qui coïncident soit avec les maxima $I_{max}$, soit avec les minima $I_{min}$ de l'intensité de lumière sortante, et la période de répétition T des parties opaques étant égale à la période de relief de surface de la couche de gel de formation de relief (5), de sorte que lorsque ledit système de modulation de lumière est incorporé à un panneau d'affichage, avec une source de lumière distribuée étant placée sur un côté du modulateur de lumière, le modulateur de lumière est adapté à créer des images qui sont visualisables à l'oeil nu.

2. Système de modulation de lumière comme revendiqué dans la revendication 1, dans lequel entre des portions adjacentes de l'électrode de signal (3) des portions d'électrode supplémentaires (52, 53) sont fournies, qui établissent un potentiel de masse constant entre les portions d'électrode de signal adjacentes.

3. Système de modulation de lumière comme revendiqué dans la revendication 1 ou 2, dans lequel la distance H du diaphragme d'arrêt (16) à la surface de relief de la couche de gel (5) et la valeur maximale du coefficient de modulation

$$K_{max} = \frac{I_{max} - I_{min}}{I_{max} + I_{min}}$$

sont en conformité avec l'intégrale de Fresnel-Kirchhoff dans les conditions

$$H \leq \frac{5 \cdot S^2}{\lambda}, \quad S \geq 3T$$

où :

S est la largeur d'une cellule de modulateur ;
T est la période du relief sur l'interface entre les couches déformables et la période des portions d'électrode de signal ; et
$\lambda$ est la longueur d'onde de la lumière incidente.

4. Système de modulation de lumière comme revendiqué dans la revendication 1, 2 ou 3, dans lequel le gel de formation de relief (5) est un gel de polyorganosiloxane.

5. Système de modulation de lumière selon l'une quelconque des revendications précédentes, dans lequel l'une (4) des deux couches diélectriques déformables est l'air.

6. Panneau d'affichage pour visualisation à l'oeil nu, qui incorpore un système de modulation de lumière comme revendiqué dans l'une quelconque des revendications précédentes et une source de lumière distribuée placée sur un côté du modulateur.

7. Procédé de modulation de lumière comprenant les étapes de fournir un panneau d'affichage pour la visualisation à l'oeil nu, ledit panneau d'affichage comprenant un modulateur de lumière et une source de lumière distribuée placée sur un côté du modulateur de lumière, et de créer des images sur ledit modulateur de lumière qui sont visualisables à l'oeil nu, dans lequel :

(a) le modulateur de lumière comprend au moins une cellule (1) qui a deux couches diélectriques déformables (4, 5) qui se rencontrent à une interface, au moins l'une d'entre elles (5) étant un gel de formation de relief, une première électrode (6) d'un côté des couches, et une électrode de signal (3) de l'autre côté des couches à laquelle des impulsions de tension de signal sont appliquées ;
(b) les critères suivants sont remplis :

$$0{,}01 \ d_1 < d_2 < d_1$$

$$d_2 > \lambda \ / \ (20|\eta_1 - \eta_2|)$$

$$|\eta_1 - \eta_2| > 0,1$$

$$t_\rho > 0,01\tau_m$$

$$0,1 \; d_1 < L < 10 \; d_1$$

où $d_2$ est la distance entre l'électrode de signal (3) et l'interface entre les couches déformables (4, 5) ; $d_1$ est la distance entre la première électrode (6) et l'interface entre les couches déformables ; X est la longueur d'onde de lumière avec laquelle le modulateur est utilisé ; $\eta_1$ est le coefficient de réfraction de l'une des couches déformables ; $\eta_2$ est le coefficient de réfraction de l'autre des couches déformables ; $t_p$ est la durée des impulsions de tension appliquées aux électrodes de signal ; $\tau_m$ est la constante de temps du relâchement mécanique du relief formé à l'interface entre les couches ; et L est la dimension minimale d'une électrode de signal unique (3) dans une direction parallèle aux couches ou, dans le cas d'une pluralité de cellules, la période spatiale minimale entre des électrodes dans des cellules adjacentes ; et

(c) l'électrode de signal (3) comprend une pluralité de portions espacées latéralement et un moyen de diaphragme d'arrêt (16) est agencé dans la cellule parallèlement aux couches diélectriques (4, 5), les moyens de diaphragme d'arrêt se composant de parties opaques répétées périodiquement qui coïncident soit avec les maxima $I_{max}$, soit avec les minima $I_{max}$ de l'intensité de lumière sortante, et la période de répétition T des parties opaques étant égale à la période de relief de surface de la couche de gel de formation de relief (5).

8. Procédé comme revendiqué dans la revendication 7, dans lequel entre des portions adjacentes de l'électrode de signal (3) il est fourni des portions d'électrode supplémentaires (52, 53) qui établissent un potentiel de masse constant entre les portions d'électrode de signal adjacentes.

9. Procédé comme revendiqué dans la revendication 7 ou 8, dans lequel la distance H du diaphragme d'arrêt (16) à la surface de relief de la couche de gel (5) et la valeur maximale du coefficient de modulation

$$K_{max} = \frac{I_{max} - I_{min}}{I_{max} \div I_{min}}$$

sont en conformité avec l'intégrale de Fresnel-Kirchhoff dans les conditions

$$H \leq \frac{S \cdot S^2}{\lambda}, \quad S \geq 3T$$

où :

S est la largeur d'une cellule de modulateur ;
T est la période du relief sur l'interface entre les couches déformables et la période des portions d'électrode de signal ; et
$\lambda$ est la longueur d'onde de la lumière incidente.

10. Procédé comme revendiqué dans la revendication 7, 8 ou 9, dans lequel le gel de formation de relief (5) est un gel de polyorganosiloxane.

11. Procédé comme revendiqué dans l'une quelconque des revendications 7 à 10, dans lequel l'une (4) des deux couches diélectriques déformables est l'air.

Signals emerging from the line buffer

FIG. 1

FIG. 2

EP 1 244 928 B1

FIG. 3

**FIG. 4**

a)

b)

c)

d)

# FIG. 5

FIG. 6

a)

b)

c)

d)

FIG. 7

EP 1 244 928 B1

FIG. 8

26

56

3 or 6

2 or 7

a)

57

3 or 6

2 or 7

b)

5

3 or 6

2 or 7

c)

# FIG. 9

FIG. 10

FIG. 11

FIG. 12

FIG. 13

FIG. 14

**FIG. 15**

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4626920 A
- US 4857978 A
- US 4900136 A
- RU 2031624
- RU 2078478
- RU 2080641
- RU 9710888604
- SU 1229646

### Non-patent literature cited in the description

- **PROFESSOR YURI GUSCHO.** Physics of Reliefography. 1999
- Characteristics of Multichannel Phase Reliefographic Light Modulators. **ALEKHIN V. A.** Avtometria. Allerton Press Inc, 1990, 38-43